Europäisches Patentamt

European Patent Office

Office européen des brevets

(11) Numéro de publication : **0 671 502 A1**

## (12) DEMANDE DE BREVET EUROPEEN

(21) Numéro de dépôt : **95400487.5**

(51) Int. Cl.⁶ : **D07B 1/16**

(22) Date de dépôt : **07.03.95**

(30) Priorité : **10.03.94 FR 9402763**

(43) Date de publication de la demande :
**13.09.95 Bulletin 95/37**

(84) Etats contractants désignés :
**AT BE CH DE DK ES FR GB GR IE IT LI LU NL
PT SE**

(71) Demandeur : **ELF ATOCHEM S.A.
4 & 8, Cours Michelet
La Défense 10
F-92800 Puteaux (FR)**

(72) Inventeur : **Strassel, Albert
30, rue Pasteur
F-69600 Oullins (FR)**
Inventeur : **Duperray, Gilbert
Le Hameau
F-69380 Civrieux d'Azergues (FR)**

(74) Mandataire : **Rochet, Michel
ELF ATOCHEM S.A.
Département Propriété Industrielle
4-8, Cours Michelet
La Défense 10 - Cedex 42
F-92091 Paris-La-Défense (FR)**

(54) **Fils, torons, câbles et haubans gaines d'un polymère rétractable, leur procédé de fabrication.**

(57)    L'invention concerne des câbles, haubans et torons notamment métalliques gainés d'une couche externe d'un polymère rétractable caractérisés en ce que est interposé, entre le polymère rétractable et le câble métallique, une couche d'élastomère co-extrudée et adhérant à la gaine de polymère rétractable avec une force d'adhésion supérieure ou égale à 1000 g/cm mesurée selon la norme ASTM D 1876. Ces câbles, haubans et torons sont notamment destinés à soutenir ponts, portiques, cheminées, grues, etc., et présentent l'avantage de pouvoir être colorés ou teintés dans la masse.

EP 0 671 502 A1

La présente invention concerne des fils, torons, câbles et haubans, de préférence métalliques, gainés d'un polymère rétractable qui peut être coloré et/ou teinté dans la masse.

En général, on appelle - fil un brin long et fin de diamètre à 3 mm, - toron un assemblage de gros fils tordus ensemble de diamètre souvent supérieur à 4 mm et le plus souvent supérieur à 15 mm, - câble un gros cordage ou un faisceau de fils, éventuellement revêtus individuellement d'une gaine protectrice, de diamètre en général supérieur à 100 mm et - hauban un câble destiné à maintenir et/ou à consolider une structure ou un assemblage.

Les haubans destinés à soutenir et consolider ponts, portiques, cheminées, grues, etc., sont des câbles d'acier généralement gainés d'un polymère oléfinique tel que le polyéthylène destiné à les protéger de la corrosion et recouverts de graisse. Le polyéthylène (PE) présente l'inconvénient de mal résister aux intempéries, aux rayonnement UV. L'utilisation du polyéthylène, notamment pour les ouvrages d'art où on demande également un matériau de couleur autre que le noir, n'est pas satisfaisante : mauvaise résistance aux intempéries, dégradation rapide de l'aspect de surface et des propriétés mécaniques, photostabilité médiocre.

On a alors proposé d'utiliser soit du polyfluorure de vinylidène (PVDF) seul pour le gainage des câbles et haubans à la place du PE, soit de l'utiliser comme revêtement protecteur du PE. En effet, le PVDF est un des polymères qui présente non seulement une excellente photostabilité lui autorisant donc une teintabilité durable et quasi illimitée dans la gamme chromatique mais aussi possède une très bonne stabilité de ses propriétés mécaniques et de son aspect de surface au cours du temps (plusieurs décennies) et ce, même au cours d'une exposition prolongée aux intempéries et/ou à une atmosphère corrosive. Cependant le PVDF possède une mauvaise résistance au choc et se rétracte lorsqu'il est extrudé autour d'une âme incompressible, telle qu'ici un fil, toron, câble et/ou hauban, et présente des tensions internes qui le fragilisent. Or un hauban ou un câble est très fréquemment soumis à un choc accidentel soit lors de sa mise en place, soit au cours de son utilisation : la gaine de PVDF se trouve alors sous contrainte et présente une résistance très inférieure à la résistance intrinsèque du polymère sans contrainte : des fissures apparaissent et on constate qu'en général les fissures initiées par ledit choc se propagent facilement le long de la gaine et plus particulièrement à basse température.

L'invention, objet de la présente demande, remédie aux inconvénients énumérés ci-dessus et consiste à interposer entre le fil, toron, câble et/ou hauban -plus simplement câble- nu ou éventuellement gainé de PE ou d'un autre polymère, et une gaine externe de polymère rétractable, un élastomère adhérent au polymère rétractable avec une force d'adhésion supérieure ou égale à 1000 g/cm, et de préférence supérieure ou égale à 1500 g/cm, mesurée selon la norme ASTM D 1876, le polymère rétractable et l'élastomère adhérent étant co-extrudés.

Par polymère rétractable, on entend tout polymère ou mélange de polymères dont le retrait linéaire au moulage (Mold Shrinkage dans Polymer Handbook) est supérieur ou égal à 0,3 %, de préférence à 1 %, et avantageusement à 3 %. Le polymère rétractable est, de préférence, un polymère semi-cristallin.

Les polymères semi-cristallins utilisables pour les besoins de l'invention sont ceux décrits dans POLYMER HANDBOOK Third Edition (édité par BRANDRUP et E.H. IMMERGUT) VI/1 à 89, et plus particulièrement :
- les polyoléfines,
- les polyamides,
- les polyuréthannes et polyurées,
- les polyesters,
- les polyéthers,
- les polyoxydes,
- les polysulfures (PPS) Parax,
- les polyéther-éther-cétones (PEEK) et leur copolymères,
- les polymères fluorés tels que :
  - les homo- et copolymères du fluorure de vinylidène (VF2),
  - les homo- et copolymères du trifluoroéthylène (VF$_3$)
  - les copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3.

Parmi les polymères fluorés, on utilise avantageusement les homopolymères du fluorure de vinylidène et les copolymères à base de fluorure de vinylidène possédant au moins 50 % en poids de motifs fluorure de vinylidène dans l'enchaînement polymérique. Par polymère fluoré, on entend également des mélanges d'au moins 70% en poids des précédents avec d'autres polymères.

On ne sortirait pas du cadre de l'invention si ces polymères rétractables, et de préférence semi-cristallins, contenaient des plastifiants, charges, pigments, stabilisants, renforçants choc, etc.

Les polymères et copolymères élastomériques sont définis par ASTM Special Technical Bulletin No 184 comme des matériaux qui peuvent être étirés à la température ambiante à deux fois leur propre longueur et qui une fois relachés après maintien sous tension pendant cinq minutes, reprennent à 10 % près, leur longueur initiale dans le même temps.Ils conviennent pour la mise en oeuvre de la présente invention à condition, comme indiqué plus haut, d'adhérer au polymère rétractable avec une force d'adhésion supérieure ou égale à 1000 g/cm, et de préférence supérieure ou égale à 1500 g/cm, mesurée selon la norme ASTM D 1876.

Les polymères élastomériques peuvent être non seulement des élastomères proprement dits (utilisés dans l'état vulcanisé ou réticulé), mais également des élastomères thermoplastiques (TPE) présentant un allongement au seuil d'écoulement supérieur à 15 %. Les TPE se situent entre les résines thermoplastiques, à mise en oeuvre facile et variée, mais à propriétés limitées en température ou, dans le domaine dynamique et les élastomères aux propriétés élastiques remarquables , mais dont la mise en oeuvre est lourde, complexe et souvent polluante. La structure des TPE comporte toujours deux phases non compatibles, l'une d'entre elles rassemblant les séquences thermoplastiques dispersées dans la phase élastomère On distingue en général 5 catégories de TPE :

- les élastomères thermoplastiques polyoléfiniques (TPO) sont des mélanges physiques réalisés à partir de polyoléfines. On distingue ceux qui contiennent plus de 60% de polypropylène et ceux dont la phase élastomère est prépondérante (plus de 70 %), celle-ci pouvant être réticulée ou non.
- les copolymères blocs à base de polystyrène dont la phase rigide est constituée de séquences polystyrène, la phase souple pouvant être par exemple formée de séquences polybutadiène (SBS), polyisoprène (SIS), ou poly(éthylènebutylène) (SEBS)
- les copolymères blocs à base de polyuréthanne (TPU) qui peuvent être obtenus par réaction conjointe d'un diol de haute masse moléculaire qui constitue la séquence souple cristallisable du TPE, sur un diisocyanate et un diol de basse masse moléculaire qui engendrent la séquence rigide.
- les copolymères blocs à base de polyester tels que ceux obtenus par copolymérisation d'un polybutylène (PBT) ou d'un polyéthylène téréphtalate (PET) qui constitue les séquences rigides et cristallines et d'un glycol de bas poids moléculaire (butane diol, diéthylène glycol) qui, associé à un polyalkylène éther glycol forme la séquence souple cristallisable.
- les copolymères blocs à base de polyamide dont les séquences rigides sont constituées de polyamide (PA) et les séquences souples cristallisables de polyéther, appelés aussi polyétheramides.

De préférence, la raideur de l'élastomère est inférieure à la raideur du polymère rétractable : elle peut être évaluée en termes de modules de torsion et/ou flexion et/ou traction et/ou dureté Shore, ces valeurs étant mesurées dans les mêmes conditions pour l'élastomère et le polymère rétractable. On préfère que la raideur de l'élastomère reste inférieure à celle du polymère rétractable quelles que soient les conditions d'utilisation, notamment de température, et compte tenu du vieillissement des matériaux.

A titre préférentiel, l'élastomère présente une dureté shore A à 23° C inférieure à 92 (et avantageusement inférieure à 70) ou shore D inférieure à 50 mesurées selon la norme ISO 868.

De préférence, l'élastomère présente un module de torsion à 23° C inférieur à 100 N/mm$^2$, avantageusement inférieur à 30 N/mm$^2$ et de façon particullièrement préférée, inférieur à 10 N/mm$^2$ (mesuré suivant DIN 53447).

De préférence, l'élastomère présente un module de traction à 23° C inférieur à 400 MPa, et avantageusement inférieur à 100 MPa (mesuré suivant ISO 527).

De préférence, l'élastomère présente un allongement à la rupture à 23° C supérieur à 50%.

A titre préférentiel, on peut utiliser les TPE qui présentent une dureté shore A à 23° C inférieure à 92 ou shore D inférieure à 50 mesurées selon la norme ISO 868. On peut utiliser aussi un élastomère qui a un point VICAT inférieur à 70 ° C quand il est mesuré par méthode A/50 de la norme ISO 306.

On utilise avantageusement des élastomères qui vérifient simultanément ces propriétés de dureté, de point VICAT et de modules de traction et torsion énoncés ci-dessus.

Les élastomères et/ou TPE particulièrement recommandés dans le cadre de l'invention peuvent être choisis parmi les copolymères EPDM, les copolymères acrylonitrile - butadiène - styrène, les copolymères méthylméthacrylate - butadiène -styrène, les copolymères ester-amide et éther-amide, les copolymères éthylène -oxyde de carbone, les terpolymères éthylène - oxyde de carbone - vinyle acétate, les caoutchoucs acryliques, les copolyéthers - esters thermoplastiques, les copolymères séquencés à base de polystyrène et d'élastomère du type polyisoprène, le polybutadiène etc... les copolymères styrène -butadiène - styrène, les copolymères éthylène - éthylacrylate, éthylène - éthylacétate et éthylène - vinyle acétate ainsi que leurs terpolymères, les élastomères fluorés, les élastomères de silicone, les élastomères silicone fluorés, les polyuréthannes.

Dans le cadre de l'invention, on peut également utiliser des mélanges d'élastomères et/ou de TPE et renforcer leur adhésion au polymère rétractable en les mélangeant avec le polymère rétractable avant de les coextruder à ce dernier.

Lorsque la gaine rétractable externe est à base de PVDF, on peut utiliser comme élastomère adhérent au PVDF :

- un TPE à base de polyuréthanne de dureté shore A inférieure à 92 mesurée selon la norme ISO 868, de préférence linéaire ou faiblement réticulé et avantageusement un élastomère thermoplastique polyuréthanne (TPU) comportant une majorité de liaisons polyesters dans les enchaînements, les autres liaisons pouvant être des liaisons polyéthers. Le brevet FR 2.415.000 décrit un matériau composite de PVDF et de TPU obtenu par co-extrusion de ces 2 polymères qui sont liés intimement au niveau de leur interface avec une force d'adhésion supérieure à 1500g/cm mesurée selon la norme ASTM D 1876. Le TPU possède habituellement une viscosité à 20° C comprise dans les limites définies ci-dessous. Les valeurs tiennent compte de la correction de RABINOWVITCH appliquée aux liquides non newtoniens.

| Vitesse de cisaillement corrigée s-1 | Viscosité en kPa.s | |
|---|---|---|
| 4,09 | 0,7 | 1,3 |
| 13,64 | 0,25 | 0,85 |
| 36,15 | 0,19 | 0,78 |
| 122,91 | 0,12 | 0,70 |

La vitesse de cisaillement est également le gradient de vitesse de déformation au cisaillement.
- un TPE présentant une alternance d'au moins un motif éthylénique et de groupements carbonyle selon par exemple :

$-[CH_2-CH_2]_n -CO-[CH_2-CH_2]_n'$ où n et n' sont identiques ou différents et $\geqq 1$.

Les brevets FR 2.577.564 et FR 2.577168 décrivent des matériaux composites co-extrudés PVDF/copolymères éthylène-oxyde de carbone dont la force d'adhésion supérieure à 1500g/cm mesurée selon la norme ASTM D 1876.
- ainsi que les copolymères résultant de la copolymérisation d'éthylène, d'oxyde de carbone et d'au moins un tiers monomère, choisis parmi les acides mono- et dicarboxyliques insaturés ayant de 3 à 20 atomes de carbone dans la chaîne principale, leur esters, les esters vinyliques d'acide carboxylique saturé ayant de 1 à 18 atomes de carbone dans la partie acide , les oxydes de vinyle , d'alcoyle ayant de 1 à 18 atomes de carbone dans la partie alcoyle, le (méth)acrylonitrile.
- On peut également utiliser tout élastomère possédant des groupements carbonyle dans sa chaîne macromoléculaire, et notamment les TPE à base polyamide ou polyester.

La co-extrusion du polymère rétractable, de préférence semi-cristallin, avec l'élastomère, de préférence TPE, autour d'un câble nu ou revêtu de PE ou d'un autre polymère, peut être mise en oeuvre de façon classique à l'aide de 2 extrudeuses, une filière et éventuellement un répartiteur de flux. Afin d'assurer une bonne adhérence entre les 2 matériaux, on préfère utiliser une filière qui réunit les 2 flux de matière au plus tard au niveau des lèvres de ladite filière et avantageusement de placer un répartiteur de flux entre les 2 extrudeuses et la filière, de façon à forcer les 2 flux de matière à cheminer ensemble le plus longtemps possible avant la sortie de la filière. Il est possible par exemple de coextruder simultanément le polymère rétractable et l'élastomère au moyen de deux extrudeuses et d'une boîte de répartition des flux en tête d'équerre recevant en son centre le tube flexible métallique à gainer.

Il est également possible de co-extruder simultanément dans un premier temps le polymère rétractable et l'élastomère ou TPE au moyen de 2 extrudeuses et d'une boîte de répartition des flux, et dans un deuxième temps de faire pénétrer le câble à gainer dans cette gaine co-extrudée.

Dans le cas où le câble est ou doit être revêtu de PE ou un autre polymère, il est possible de co-extruder simultanément le polymère rétractable, l'élastomère et le PE ou tout autre polymère.

L'épaisseur de la couche d'élastomère peut en général varier de 20 $\mu$m à 3 mm et l'épaisseur de la couche de polymère rétractable de 100 $\mu$m à 5 mm

Les exemples suivants illustrent l'invention sans toutefois la limiter.

## Exemple 1

On dispose d'un câble d'acier de 32 mm de diamètre. A l'aide d'une extrudeuse et d'une tête d'équerre, on gaine le câble de façon classique d'une couche de polyfluorure de vinylidène de 0,5 mm d'épaisseur (Foraflon® 1000 HD d'Elf Atochem) - essai 1 (comparatif).

Avec le matériel classique de coextrusion bi-matière et d'une tête d'équerre multicanaux obligeant les flux des deux polymères à se superposer peu avant les lèvres de la filière, on coextrude sur un câble identique une couche de 0,2 mm de TPU type polyester (Estane® 58271 et Goodrich) et, par-dessus, une couche de

EP 0 671 502 A1

0,5 mm d'épaisseur du même polyfluorure de vinylidène - essai 2.

L'essai 3 est identique a l'essai 1, et l'essai 4 est identique à l'essai 2, mais le câble d'acier a été revêtu au préalable de 2 mm d'épaisseur de polyéthylène (pas d'adhésion entre TPU et PE).

On découpe des barres de 1 m de long. Pour comparer les essais entre eux, on utilise la norme ISO 6603/1 en ce qui concerne l'appareillage, le système porte-projectile et le percuteur qui est une masse en acier dont la surface de percussion polie, dure et hémisphérique est de ± 20mm de diamètre. La masse est de 1 490 grammes.

Les barres sont placées dans un porte-éprouvette fixe, juste en-dessous du porte-projectile et de son guide, de telle sorte que la masse tombe exactement au milieu de la barre cylindrique.

Selon la norme ISO 6603/1, on effectue 30 essais pour chaque type de barreau.

Après le choc, on note la hauteur et l'aspect du point d'impact qui peut être, dans l'ordre croissant de l'endommagement :

① gaine marquée plus ou moins profondément mais sans destruction ;
② gaine marquée avec fissurations en étoile autour du point d'impact ;
③ gaine fissurée au-delà du point d'impact ;
④ gaine fissurée en fissures multiples se propageant ou éclatement.


## Hauteur de la chute de la masse
### (Norme ISO 6603/1)

| Essai | Température du câble gainé | |
|---|---|---|
| | 20°C | -30°C |
| 1  PVDF sur câble acier | 1  m : fissure sur 40 cm ④ | 1 m : fissures multiples sur 1m ③ |
| 2  PVDF coextrudé TPU sur câble d'acier | 1  m : marqué ①<br>2  m : marqué en étoile ② | 1 m : marqué en étoile ② |
| 3  PVDF sur câble acier revêtu de PE de 2 mm d'épaisseur | 1  m : marqué en étoile ③<br>1,5 m : fissure sur 5 cm ③ | 2 m : fissure sur 2 à 3 cm ②<br>1 m : fissures multiples sur 1m ④ |
| 4  PVDF coextrudé TPU sur câble acier revêtu de PE de 2 mm d'épaisseur | 1  m : marqué ①<br>2  m : marqué ① | 1 m : marqué ① |
| 5  PVDF coextrudé avec TPU et PE sur câble acier | 1  m : marqué ①<br>2  m : marqué ① | 2 m : marqué en étoile ② |
| 6  Idem, mais les trois polymères sont extrudés successivement - il n'y a pas adhésion entre PVDF et TPU, ni entre TPU et PE | 1  m : marqué en étoile ②<br>2  m : fissure sur 5 à 10 cm③ | 1 m : marqué ①<br>2 m : marqué en étoile ②<br>1 m : fissures multiples sur 1m ④<br>2 m : éclatement ④ |


## Exemple 2

On opère exactement avec le même matériel d'extrusion et le même appareillage de test que dans l'exemple 1. Toutefois, la filière est adaptée pour gainer des torons d'acier de 19 mm de diamètre.

On procède au gainage de ces torons selon plusieurs méthodes, en utilisant toujours :

a) le polyfluorure de vinylidène (Foraflon® 1000 HD) et

le polyéthylène (lacqtène® 2003 SN 53 d'Elf Atochem SA.) mais comme

c) élastomère, un terpolymère éthylène-oxyde de carbone-acétate de vinyle, de composition en % en poids: motifs éthyléniques = 68, groupements carbonyles = 12, motifs acétate de vinyle = 20 (déterminés par analyse). Ce terpolymère est mélangé avec 15 % en poids de polyfluorure de vinylidène (Foraflon® 6000 HD).

La coextrusion de a et c assure entre les polymères une adhésion de 1 800 g/cm, mesurée selon la norme ASTM D 1876 en effectuant un essai de pelage sur des bandes de 25 mm x 180 mm à une vitesse de 250 m/min.

5

Essai 7 : le toron est revêtu de 2 mm de polyéthylène qui est revêtu ensuite d'1 mm de PVDF.

Essai 8 : dans cet essai, le PVDF (1mm), l'élastomère (0,8 mm) et le polyéthylène (2 mm) sont coextrudés en même temps. Il y a adhésion des trois polymères.

Essai 9 : le PVDF (1 mm) et l'élastomère (0,8 mm) sont coextrudés pardessus le polyéthylène (2 mm) déjà extrudé sur le toron. Il y a adhésion entre PVDF et élastomère, mais non entre élastomère et polyéthylène.

Essai 10 : on extrude les trois polymères avec les mêmes épaisseurs que pour les essais 8 et 9 mais séparément, de telle sorte qu'il n'y ait pas d'adhésion entre eux : le polyéthylène est toujours au contact du toron d'acier, il est revêtu de l'élastomère, lui-même revêtu du PVDF.

| Energie nécessaire à produire l'éclatement ou la fissuration sur 1 m de la gaine(en Joules) | | |
|---|---|---|
| **Essai** | **20°C** | **-30°C** |
| **7** sans élastomère | 15 | 3 |
| **8** avec élastomère avec adhésion côté PVDF et PE | > 58 | 29 |
| **9** avec élastomère avec adhésion côté PVDF sans adhésion côté PE | > 58 | 29 |
| **10** avec élastomère sans adhésion côté PVDF ni côté PE | 22 | 3 |

## Revendications

1. Fil, toron, câble et/ou hauban gainé d'un polymère rétractable, de préférence semi-cristallin, dont le retrait linéaire au moulage est supérieur à 0,3 %, de préférence supérieur à 1 % et avantageusement supérieur à 3 %, caractérisé en ce qu'est interposé, entre la gaine externe de polymère rétractable et le fil, toron, câble ou hauban, une couche d'élastomère dont la force d'adhésion au polymère rétractable est supérieure ou égale à 1000 g/cm, et de préférence supérieure ou égale à 1500 g/cm, mesurée selon la norme ASTM D 1876.

2. Fil, toron, câble et/ou hauban selon la revendication 1, caractérisé en ce que la raideur de l'élastomère est inférieure à celle du polymère rétractable.

3. Fil, toron, câble et/ou hauban selon la revendication 1 ou 2, caractérisé en ce que l'élastomère est choisi parmi les élastomères silicones, éventuellement fluorés, et/ou les TPE à base polyamide et/ou les TPU et/ou les copolymères EPDM et/ou les copolymères acrylonitrile - butadiène -styrène et/ou les copolymères méthylméthacrylate - butadiène - styrène et/ou les copolymères éthylène - oxyde de carbone et/ou les terpolymères éthylène - oxyde de carbone - vinyle acétate et/ou les caoutchoucs acryliques et/ou les TPO et/ou les TPE à base polyester et/ou les copolymères éthylène -éthylacrylate, éthylène - éthylacétate et éthylène - vinyle acétate ainsi que leurs terpolymères et/ou les élastomères fluorés les élastomères silicone fluorés.

4. Fil, toron, câble et/ou hauban selon l'une des revendications 1 à 3, caractérisé en ce que le(s) polymère(s) rétractable(s) sont choisis parmi :
   - les polyoléfines,
   - les polyamides,
   - les polyuréthannes et polyurées,
   - les polyesters,
   - les polyéthers,
   - les polyoxydes,
   - les polysulfures (PPS) Parax,
   - les polyéther-éther-cétones (PEEK) et leur copolymères,
   - les polymères fluorés tels que
     - les homo- et copolymères du fluorure de vinylidène (VF2),
     - les homo- et copolymères du trifluoroéthylène (VF$_3$)
     - les copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3, et avantageusement le PVDF et les copolymères ayant au moins 50 % en poids de motifs fluorure de vinylidène dans l'enchaînement polymérique, seuls ou dans des mélanges avec d'autres polymères, lesdits polymères .

5.  Fil, toron, câble et/ou hauban selon l'une des revendications 1 à 4, caractérisé en ce que, lorsque le polymère rétractable est du PVDF, l'élastomère est choisi parmi les TPU, de préférence à base polyester, et/ou les TPE présentant une alternance d'au moins un motif éthylénique et de groupements carbonyle et/ou les copolymères résultant de la copolymérisation d'éthylène, d'oxyde de carbone et d'au moins un tiers monomère, choisis parmi les acides mono- et dicarboxyliques insaturés ayant de 3 à 20 atomes de carbone dans la chaîne principale, leur esters, les esters vinyliques d'acide carboxylique saturé ayant de 1 à 18 atomes de carbone dans la partie acide les oxydes de vinyle , d'alcoyle ayant de 1 à 18 atomes de carbone dans la partie alcoyle, le (méth)acrylonitrile et/ou tout élastomère possédant des groupements carbonyle dans sa chaîne macromoléculaire, et notamment les TPE à base polyamide ou polyester.

6.  Procédé de fabrication de fil, toron, câble et/ou hauban selon l'une quelconque des revendications 1 à 5, caractérisé en ce que le polymère rétractable et l'élastomère sont coextrudés directement sur le fil, toron, câble et/ou hauban.

7.  Procédé de fabrication de fil, toron, câble et/ou hauban selon l'une quelconque des revendications 1 à 5, caractérisé en ce que le polymère rétractable et l'élastomère sont coextrudés ensemble dans un premier temps, puis de faire pénétrer le câble à gainer dans cette gaine co-extrudée.

8.  Procédé de fabrication selon la revendication 6 ou 7 de fil, toron, câble et/ou hauban préalablement gainé de PE ou d'un autre polymère, caractérisé en ce que ledit polymère est co extrudé avec l'élastomère et éventuellement avec le polymère rétractable.

9.  Utilisation de fil, câble, toron et/ou hauban gainés et éventuellement colorés ou teintés dans la masse selon l'une quelconque des revendications 1 à 5 dans le domaine du bâtiment, pour le soutien de ponts, portiques, cheminées, grues, etc., et pour tout ouvrage d'art.

**Office européen des brevets**

# RAPPORT DE RECHERCHE EUROPEENNE

Numero de la demande

EP 95 40 0487

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | DATABASE WPI<br>Week 9142,<br>Derwent Publications Ltd., London, GB;<br>AN 91-307401<br>& JP-A-3 206 193 (SUMITOMO ELECTRIC INDUSTRIES LTD.; NIPPON STEEL CORPORATION)<br>9 Septembre 1991<br>* abrégé * | 1,6,8 | D07B1/16 |
| A | --- | 4,9 | |
| D,Y | FR-A-2 577 168 (SOCIETE ATOCHEM)<br>* page 1, ligne 1 - page 2, ligne 32 *<br>* page 4, ligne 1 - ligne 28 *<br>* exemple 7 * | 1,6,8 | |
| A | --- | 2-5 | |
| D,A | FR-A-2 577 564 (SOCIETE ATOCHEM)<br>--- | | |
| D,A | FR-A-2 415 000 (PRODUITS CHIMIQUES UGINE KUHLMANN)<br>----- | | |

**DOMAINES TECHNIQUES RECHERCHES (Int.Cl.6)**

D07B

Le présent rapport a été établi pour toutes les revendications

| Lieu de la recherche | Date d'achèvement de la recherche | Examinateur |
|---|---|---|
| LA HAYE | 10 Juillet 1995 | Goodall, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)